# EUROPÄISCHE PATENTSCHRIFT

(11) **EP 4 398 403 B1**
(45) Veröffentlichungstag und Bekanntmachung des Hinweises auf die Patenterteilung: **07.10.2026**
(21) Anmeldenummer: 24176513.0
(22) Anmeldetag: 05.11.2019
(51) Int. Cl.: H01M 10/0525, H01M 50/403, H01M 50/409

(54) **VERFAHREN ZUR HERSTELLUNG EINER PORÖSEN FOLIE**
METHOD FOR PRODUCING POROUS FILM
PROCÉDÉ DE FABRICATION D'UN FILM POREUX

(43) Veröffentlichungstag der Anmeldung: 10.07.2024
(62) Dokumentnummer(n) der früheren Anmeldung(en) nach Art. 76 EPÜ: 19802037.2 / 4 055 658
(73) Patentinhaber: Creonia Cells GmbH, 4320 Perg (AT)
(72) Erfinder: Ungerank, Markus, 4320 Perg (AT)
(74) Vertreter: Puchberger & Partner Patentanwälte

(56) Entgegenhaltungen:
- EP-A1- 2 833 439
- DE-T2- 60 212 274
- DE-T5- 112010 000 853
- US-A1- 2009 155 678

## Beschreibung

Die vorliegende Erfindung betrifft ein Verfahren zur Herstellung einer porösen Folie gemäß dem unabhängigen Patentanspruch. Die Erfindung betrifft ferner eine unter Verwendung des erfindungsgemäßen Verfahrens hergestellte Folie, ein Elektrodenmaterial, das diese Folie umfasst, sowie ein Energiespeichermedium, das dieses Elektrodenmaterial umfasst.

Lithium-(Li-)Ionen-Akkus gelten als Schlüssel zum weiteren Ausbau der Bereiche Elektromobilität und Stationärstromspeicher. Der Vorteil der Li-Ionen-Technologie besteht unter anderem in der wesentlich höheren Energie- und Leistungsdichte im Vergleich zu anderen Energiespeichersystemen sowie einer geringen Selbstentladung.

Die im Stand der Technik bekannte Herstellung von Li-Ionen-Akkus ist jedoch mit erheblichen fertigungstechnischen Herausforderungen verbunden, die unter anderem durch extreme Präzisionsanforderungen, etwa hinsichtlich der Schichtdicken der einzelnen Elektroden, entstehen. Darüber hinaus erfordern bekannte Li-Ionen-Akkus üblicherweise komplizierte Fertigungsschritte. Die Vielfalt der Zelltypen, die am Markt erhältlich ist, steigert die Komplexität noch weiter.

Laut Schätzungen entfallen in einer im Stand der Technik üblichen Serienfertigung zwei Drittel der Kosten auf das verwendete Material. Der Weg zu geringeren Herstellungskosten kann also über höheren Durchsatz, weniger Ausschuss und günstigere Kathodenmaterialien führen.

Ein wesentlich limitierender Aspekt ist die Herstellung der Einzelkomponenten für die Batteriezellen bzw. Batterien. Im Stand der Technik werden zur Herstellung von Li-Ionen-Batteriezellen Kathode, Anode, sowie der zwischen Kathode und Anode angeordnete elektrisch isolierende Separator getrennt gefertigt und anschließend in einem aufwändigen Verfahren zu Zellen verschiedener Geometrie verarbeitet.

Die Dicke der Anode und Kathode ist prozessbedingt limitiert, da der Herstellungsprozess im Stand der Technik mit dem Verdampfen eines Lösungsmittels, beispielsweise in einem Bandofen, verbunden ist. Nimmt die Dicke der so hergestellten Folien zu, ist ein gleichmäßiges Verdampfen des Lösungsmittels nicht mehr gewährleistet und es kann zu einer inhomogenen Struktur der Elektroden kommen, was deren Qualität beeinträchtigt. Dickere Beschichtungen von Anoden und/oder Kathoden führen auch zu erhöhtem Anlagenaufwand durch längere Trocknungsstrecken, da die Abdampfzeit des Lösungsmittels quadratisch mit der Dicke der Beschichtung zunimmt. Dickere Elektroden bzw. Folien für Elektrodenmaterialien wären jedoch wünschenswert, um die Speicherkapazität der Li-Ionen-Akkus zu verbessern.

Es ist eine Aufgabe der vorliegenden Erfindung, diesen Zielkonflikt zu lösen und ein Verfahren zu schaffen, das die Herstellung von dickeren Folien bei gleichbleibender Qualität ermöglicht, wobei die Folien bevorzugt zur Herstellung von Elektrodenmaterialien für Li-Ionen-Akkus geeignet sind.

Diese Aufgabe wird durch ein Verfahren mit den Merkmalen des unabhängigen Patentanspruchs gelöst.

Die vorliegende Erfindung betrifft also ein Verfahren zur Herstellung einer einschichtigen oder mehrschichtigen porösen Folie.

Gegebenenfalls sind folgende Verfahrensschritte vorgesehen:
- Bereitstellen einer fließfähigen ersten Basismischung für eine erste Folienschicht der Folie, wobei die erste Basismischung ein Lösungsmittel, einen im Lösungsmittel unlöslichen Zuschlagstoff und ein im Lösungsmittel gelöstes polymeres Bindemittel umfasst,
- Bilden eines Folien-Precursorfilms, wobei der Folien-Precursorfilm wenigstens eine Teilschicht aus der ersten Basismischung umfasst,
- **In** Kontakt bringen des Folien-Precursorfilms mit einem Fällungsmittel, wobei das Lösungsmittel der ersten Basismischung im Fällungsmittel löslich ist, wobei das Bindemittel in dem Fällungsmittel zumindest teilweise unlöslich ist, und wobei das Bindemittel ausgefällt wird, sodass die poröse Folie gebildet wird.

Gegebenenfalls ist vorgesehen, dass das Verfahren zusätzlich zum Bereitstellen einer fließfähigen ersten Basismischung umfasst:
- Bereitstellen einer fließfähigen zweiten Basismischung zum Bilden einer zweiten Folienschicht, wobei die zweite Basismischung ein Lösungsmittel, einen im Lösungsmittel unlöslichen Zuschlagstoff, sowie ein im Lösungsmittel gelöstes polymeres Bindemittel umfasst, und
- Bereitstellen einer fließfähigen dritten Basismischung zum Bilden einer Trennschicht, wobei die Separatormischung ein Lösungsmittel, sowie ein im Lösungsmittel gelöstes polymeres Bindemittel umfasst,

Gegebenenfalls ist vorgesehen, dass der Folien-Precursorfilm eine zweite Teilschicht aus der zweiten Basismischung und eine dritte Teilschicht aus der dritten Basismischung umfasst, wobei die Teilschichten in der Haupterstreckungsrichtung des Folien-Precursorfilms parallel zueinander verlaufen.

Gegebenenfalls ist vorgesehen, dass das Bindemittel der Basismischungen in dem Fällungsmittel zumindest teilweise unlöslich ist, wobei das Bindemittel ausgefällt wird, sodass die poröse Folie gebildet wird.

Gegebenenfalls ist vorgesehen, dass die dritte Basismischung im Wesentlichen frei von elektrisch leitenden Bestandteilen bzw. elektrisch nicht leitend ist.

Gegebenenfalls ist vorgesehen, dass zur Bildung des Folien-Precursorfilms die dritte Basismischung zwischen der ersten Basismischung und der zweiten Basismischung angeordnet wird.

Gegebenenfalls ist vorgesehen, dass das polymere Bindemittel der Basismischung(en) Polysulfone, Polyimide, Polystyrol, Carboxymethylcellulose, Polyetherketone, Polyether, Polyelektrolyte, fluorierte Polymere, insbesondere Polyvinilydenfluorid, oder eine Mischung von zumindest zwei davon umfasst oder daraus besteht.

Gegebenenfalls ist vorgesehen, dass das Lösungsmittel der Basismischung(en) Dimethylacetamid, Dimethylformamid, N-Methylpyrrolidon, N-Ethylpyrrolidon, Sulfolan, Dimethylsulfoxid, Methanol, Etahnol, Isopropanol, Wasser oder eine Mischung von zumindest zwei davon umfasst oder daraus besteht.

Gegebenenfalls ist vorgesehen, dass der Zuschlagstoff ein elektroaktives Mittel ist.

Gegebenenfalls ist vorgesehen dass das elektroaktive Mittel ein Lithiumoxid und oder ein Lithiumsulfid und/oder ein Lithiumfluorid und/oder ein Lithiumphosphat umfasst oder daraus besteht, insbesondere Lithium-Mangandioxid, Lithium-Cobaltdioxid, Lithium-Nickel-Mangan-Cobaltdioxid, Lithium-Nickel-Cobalt-Aluminiumoxid, Lithium-Nickel-Mangan-Spinell, Lithium-Nickel-Mangandioxid, Lithium-Eisenphosphat, Lithium-Manganphospat, Lithium-Cobaltphosphat oder eine beliebige Mischung daraus.

Gegebenenfalls ist vorgesehen, dass das elektroaktive Mittel Graphit, Graphen, Silicium-Nanopartikel, Lithiumtitanat, Zinn oder eine Mischung davon umfasst oder daraus besteht.

Gegebenenfalls ist vorgesehen, dass die Basissuspension zusätzlich ein Leitfähigkeitsmittel umfasst, wobei das Leitfähigkeitsmittel leitfähigen Kohlenstoff, insbesondere Ruß, Graphen oder Graphit, umfasst oder daraus besteht.

Gegebenenfalls ist vorgesehen, dass das Fällungsmittel Wasser, wenigstens einen Alkohol, beispielsweise Methanol, Ethanol, iso-Propanol, das Lösungsmittel einer Basismischung, oder eine Mischung daraus umfasst oder daraus gebildet ist.

Gegebenenfalls ist vorgesehen, dass das Bilden des Folien-Precursorfilms das trägerlose Extrudieren der Basismischung(en), bevorzugt das trägerlose Co-Extrudieren der ersten Basismischung, der zweiten Basismischung und der dritten Basismischung, umfasst.

Gegebenenfalls ist vorgesehen, dass der Folien-Precursorfilm nach Schritt (b) und vor Schritt (c) einseitig oder beidseitig mit einem Vorfällungsmittel in Kontakt gebracht, insbesondere flächig beschichtet, wird, wobei das Bindemittel der Basismischung(en) im Vorfällungsmittel unlöslich ist.

Gegebenenfalls ist vorgesehen, dass das Verfahren zusätzlich den Schritt umfasst: Waschen des Films in einer Waschlösung, wobei die Waschlösung vorzugsweise Wasser oder wenigstens einen Alkohol, beispielsweise Methanol, Ethanol, iso-Propanol oder eine Mischung daraus, umfasst oder daraus gebildet ist.

Gegebenenfalls ist vorgesehen, dass das Verfahren zusätzlich den Schritt umfasst: Trocknen der Folie in einer Trocknungsvorrichtung, vorzugsweise einem Band- oder Walzentrockner, mit Umluft oder einem Inertgas.

Gegebenenfalls ist vorgesehen, dass das Verfahren zusätzlich den Schritt umfasst: Kompaktieren der Folie in einer Pressvorrichtung, einer Walzvorrichtung oder einer Kalandriervorrichtung, vorzugsweise unter Einwirkung einer Temperatur von größer als 50°C oder Kompaktieren der Folie durch thermisches Schrumpfen.

Die Erfindung betrifft ferner eine poröse Folie hergestellt mit einem erfindungsgemäßen Verfahren.

Gegebenenfalls ist vorgesehen, dass die Folie eine bevorzugt im Wesentlichen konstante Dicke zwischen 50 µm und 1000 µm, bevorzugt zwischen 200 µm und 500 µm, aufweist.

Gegebenenfalls ist vorgesehen, dass die Folie eine erste Folienschicht, eine zweite Folienschicht und eine zwischen der ersten und der zweiten Folienschicht angeordnete Trennschicht umfasst, wobei die erste Folienschicht und die zweite Folienschicht eine Dicke zwischen 20 µm und 500 µm aufweisen, und wobei die Trennschicht eine Dicke zwischen 5 µm und 50 µm aufweist.

Gegebenenfalls ist vorgesehen, dass die Trennschicht ein elektrischer Isolator ist.

Gegebenenfalls ist vorgesehen, dass die erste Folienschicht und die zweite Folienschicht ein elektrischer Leiter ist.

Die Erfindung betrifft ferner ein Elektrodenmaterial umfassend eine erfindungsgemäße Folie, sowie eine an den Außenflächen des Elektrodenmaterials angeordnete Stromableitungsschicht.

Gegebenenfalls umfasst das Elektrodenmaterial wenigstens zwei Lagen einer erfindungsgemäßen Folie.

Die Erfindung betrifft ferner ein Energiespeichermedium umfassend ein erfindungsgemäßes Elektrodenmaterial, sowie einen Elektrolyten und zwei Kontaktierungselemente.

Weitere Merkmale der Erfindung ergeben sich aus der Beschreibung, den Patentansprüchen, den Ausführungsbeispielen, den Figuren, sowie den bevorzugten Aspekten der Erfindung.

Im erfindungsgemäßen Verfahren kann eine erste Basismischung bereitgestellt werden, die zur Bildung einer ersten Folienschicht formuliert ist. Die erste Basismischung kann wenigstens ein Lösungsmittel, einen im Lösungsmittel unlöslichen Zuschlagstoff, sowie ein im Lösungsmittel gelöstes polymeres Bindemittel umfassen.

Es ist vorteilhaft, wenn die mit dem erfindungsgemäßen Verfahren hergestellte Folie eine mehrschichtige Folie ist. Der Assemblierungsschritt der einzelnen Elektroden zur Herstellung einer Zelle ist dann nicht notwendig und eine mögliche Fehlerquelle wird eliminiert. Zusätzlich wird im Vergleich zur Herstellung von einzelnen Schichten die mechanische Stabilität der Folie erhöht und einzelne Teilschichten können, sofern erforderlich, dünner ausgebildet sein.

Dementsprechend kann neben der ersten Basismischung auch eine zweite Basismischung bereitgestellt werden. Die zweite Basismischung kann wenigstens ein Lösungsmittel, einen im Lösungsmittel unlöslichen Zuschlagstoff, sowie ein im Lösungsmittel gelöstes polymeres Bindemittel umfassen.

Neben der ersten Basismischung und der zweiten Basismischung kann auch eine dritte Basismischung bereitgestellt werden. Die dritte Basismischung kann wenigstens ein Lösungsmittel, sowie ein im Lösungsmittel gelöstes polymeres Bindemittel umfassen. Die dritte Basismischung kann frei von unlöslichen Zuschlagstoffen sein. Die dritte Basismischung kann alternativ unlösliche Zuschlagstoffe umfassen, welche bevorzugt elektrisch nicht leitend sind.

Neben der ersten, zweiten und dritten Basismischung können auch weitere Basismischungen bereitgestellt werden, entsprechend den Anforderungen an das endgültige Folienprodukt.

Beispielsweise können eine vierte und eine fünfte Basismischung bereitgestellt werden, die zur Bildung von Entladungsschutzschichten ausgebildet sind. Die vierte und fünfte Basismischung können beim Bilden des Folien-Precursorfilms zwischen der ersten und dritten bzw. zwischen der zweiten und dritten Teilschicht angeordnet werden. Die vierte und fünfte Basismischung können als Bindemittel insbesondere ein polymeres Material mit niedrigem Schmelzpunkt umfassen. Insbesondere liegt der Schmelzpunkt dieses Bindemittels unter 100°C, bevorzugt unter 80°C.

In einer bevorzugten Ausführungsform ist vorgesehen, dass die erste Basismischung zur Bildung eines Anodenmaterials ausgebildet ist, die zweite Basismischung zur Bildung eines Kathodenmaterials ausgebildet ist und die dritte Basismischung zur Bildung einer zwischen Kathodenmaterial und Anodenmaterial angeordneten Trennschicht ausgebildet ist. Das Anodenmaterial und das Kathodenmaterial sind bevorzugt elektrisch leitfähig. Die Trennschicht ist bevorzugt elektrisch isolierend.

Dementsprechend enthalten die erste Basismischung und die zweite Basismischung bevorzugt leitende Bestandteile, insbesondere leitende, im Lösungsmittel unlösliche Zuschlagstoffe. Besonders bevorzugt können die Zuschlagstoffe elektroaktive Mittel sein, Ionen aufnehmen oder abgeben können, bevorzugt Lithium Ionen aufnehmen oder abgeben können. Die dritte Basismischung enthält bevorzugt keine leitenden Bestandteile. Die dritte Basismischung kann jedoch im Lösungsmittel unlösliche Zuschlagstoffe enthalten, die jedoch bevorzugt nicht elektrisch leitend sind. Diese Zuschlagstoffe oder Füllstoffe können die Stabilität der Trennschicht bei weiteren Verarbeitungsschritten verbessern. Gegebenenfalls kann die dritte Basismischung jedoch auch keine unlöslichen Zuschlagstoffe enthalten.

Die einzelnen Bestandteile der Basismischungen können gleich, teilweise gleich oder gänzlich unterschiedlich sein. Beispielsweise kann die erste Basismischung ein Polyimid als polymeres Bindemittel und N-Methylpyrrolidon als Lösungsmittel umfassen, während die zweite Basismischung Polystyrol als polymeres Bindemittel und Dimethylformamid als Lösungsmittel umfasst.

Aus den Basismischungen können Folien-Precursorfilme gebildet werden. Bevorzugt weisen die Basismischungen eine Viskosität auf, die ein Extrudieren der Basismischungen, ein Rakeln der Basismischungen oder die Anwendung eines anderen im Stand der Technik bekannten Verfahrens zur Bildung von dünnen Schichten erlaubt.

Die Basismischung(en) kann/können unabhängig voneinander eine Viskosität aufweisen, die größer als 10² mPa*s, bevorzugt größer als 10³ mPa*s, weiter bevorzugt größer als 10⁴ mPa*s, ist.

Der Folien-Precursorfilm ist bevorzugt ein mehrschichtiger Folien-Precursorfilm, der mehrere Teilschichten umfasst. Die Teilschichten verlaufen im Wesentlichen parallel zueinander und es kommt zu keiner wesentlichen Vermischung der Teilschichten. Entsprechend den Löslichkeiten kann in den grenzflächennahen Bereichen eine gewisse Vermischung der Komponenten der einzelnen Teilschichten stattfinden.

Bevorzugt erfolgt die Bildung des Folien-Precursorfilms durch Co-Extrudieren der Basismischungen.

Nach dem Bilden des Folien-Precursorfilm wird dieser mit einem Fällungsmittel in Kontakt gebracht, bevorzugt in dieses eingetaucht. Das oder die Bindemittel der Basismischungen sind zumindest teilweise im Fällungsmittel unlöslich, sodass das oder die Bindemittel bei Kontakt mit dem Fällungsmittel ausgefällt wird/werden. Diese Phasenumkehrreaktion kann die Bildung einer porösen Folie bewirken. Die physikalischen Eigenschaften der Folie sind maßgeblich vom Grad der Unlöslichkeit des Bindemittels bzw. der Bindemittel im Fällungsmittel abhängig.

Dadurch wird eine freitragende Folie gebildet, die bevorzugt keinerlei Stützmedium erfordert. Wenn der Precursorfilm mit einem Extrusionsverfahren hergestellt wird, kann die erhaltene poröse Folie als endloses Bahnmaterial erhalten werden.

Die Folie kann bevorzugt mehrere Teilschichten aufweisen, insbesondere eine erste Folienschicht, eine zweite Folienschicht und eine zwischen der ersten und der zweiten Folienschicht angeordnete Trennschicht. Die Zusammensetzung der ersten Folienschicht ist insbesondere von der ersten Basismischung abgeleitet, die Zusammensetzung der zweiten Folienschicht von der zweiten Basismischung und die Zusammensetzung der Trennschicht von der dritten Basismischung.

**In** einer bevorzugten Ausführungsform der Folie ist die erste Folienschicht eine Anodenschicht, die zweite Folienschicht eine Kathodenschicht und die dritte Folienschicht eine Separatorschicht. Die Kathodenschicht kann als elektroaktives Mittel insbesondere ein Lithiummetalloxid oder ein Lithiummetallphosphat umfassen.

Wenn Entladungsschutzschichten zwischen der Kathodenschicht und der Trennschicht bzw. zwischen der Anodenschicht und der Trennschicht vorgesehen sind, können diese die Entladung eines Energiespeichermediums bei einer bestimmten Temperatur verhindern. Überschreitet die Zelltemperatur den Schmelzpunkt des Bindemittels der Entladungsschutzschichten, dringt dieses in die Poren der Trennschicht ein und verschließt diese, sodass kein Ladungsaustausch zwischen der Kathodenschicht und der Anodenschicht mehr stattfinden kann.

Zusätzliche Verfahrensschritte können vorgesehen sein, um das erfindungsgemäße Herstellungsverfahren weiter zu verbessern.

Der Folien-Precursorfilm kann vor dem in Kontakt bringen mit dem Fällungsmittel einseitig oder beidseitig mit einem Vorfällungsmittel in Kontakt gebracht werden. Dieses kann andere Löslichkeitseigenschaften wie das Fällungsmittel aufweisen und dadurch einen ersten Fällungsschritt initiieren. Das in Kontakt bringen mit dem Vorfällungsmittel kann direkt vor dem in Kontakt bringen mit dem Fällungsmittel erfolgen, beispielsweise durch Besprühen des Precursorfilms mit dem Vorfällungsmittel. Gegebenenfalls können auf beiden Seiten des Precursorfilms unterschiedliche Vorfällungsmittel appliziert werden. Das Vorfällungsmittel kann auch zusätzlich zu den Basismischungen extrudiert werden.

Das Vorfällungsmittel kann gegebenenfalls dieselbe Zusammensetzung aufweisen wie das Fällungsmittel.

Durch die Aufbringung des Vorfällungsmittels kann eine rasche Koagulation des Bindemittels in den äußeren Schichten des Folien-Precursorfilms erreicht werden. So kann eine hautähnliche Oberfläche gebildet werden, die Fluktuationen in der Dicke und einer Verjüngung in der Breite der erhaltenen Folie bei der Extrusion unterdrücken kann. Zusätzlich erlaubt die Verwendung eines Vorfällungsmittels die gezielte Einstellung der Porosität und der Benetzbarkeit an der Oberfläche der Folie.

Die endgültige Koagulation des Bindemittels und die Bildung der porösen Folie erfolgt im Fällungsmittel, das vorzugweise in einem Fällbad enthalten ist. Die Porenstruktur der Folie kann variiert werden durch Einstellung von Parametern wie Bindemittelkonzentration in den Basismischungen, Art der verwendeten Lösungsmittel in den Basismischungen, Zusammensetzung des Fällungsmittels, Temperatur des Fällungsmittels, etc.

Die gebildete poröse Folie kann gegebenenfalls über eine Anordnung von Rollen oder Walzen weiter transportiert werden. Gegebenenfalls kann die Folie nach Bilden der Folie in eine Waschlösung eingebracht werden, um Fällungsmittel, Lösungsmittel und andere Verunreinigungen zu entfernen.

Gegebenenfalls kann die Folie nach dem Waschen noch durch ein weiteres Waschbad geführt werden, um das Waschmittel oder die Waschlösung des ersten Waschbades zu verdrängen. Gegebenenfalls kann die Folie nach den Waschbädern durch einen Trockner geführt werden, um das Waschmittel oder die Waschlösung abzudampfen. Die hohe Porosität der Folie und der niedrige Siedepunkt des Waschmittels erleichtern und beschleunigen die Abdampfung des Waschmittels aus der Folie.

Gegebenenfalls kann die Folie in einer Pressvorrichtung, beispielsweise einer Walzvorrichtung oder einer Kalandriervorrichtung kompaktiert werden, um die Folie zu verdichten. Die Kompaktierung kann auch unter Wärmeeinwirkung erfolgen, beispielsweise bei einer Temperatur, die über dem Erweichungspunkt wenigstens eines Bindemittels liegt, mit oder ohne Pressvorrichtung.

Die durch das erfindungsgemäße Verfahren erhaltene Folie kann eine hohe Porosität aufweisen. Die Porosität der ersten und der zweiten Folienschicht kann unabhängig voneinander größer als 0,10, größer als 0,20, größer als 0,30, größer als 0,40, größer als 0,50, größer als 0,60, größer als 0,70, größer als 0,80, oder größer als 0,90 sein. Die Porosität der ersten und der zweiten Folienschicht kann unabhängig voneinander kleiner als 0,99, kleiner als 0,95, oder kleiner als 0,90 sein.

**In** einer Ausführungsform liegt die Porosität einer Anodenschicht zwischen 0,2 und 0,4. **In** einer Ausführungsform liegt die Porosität einer Kathodenfolie zwischen 0,5 und 0,7.

Die Porosität der Trennschicht kann insbesondere größer als die Porosität der ersten und der zweiten Folienschicht sein. Eine hohe Porosität der Trennschicht führt zu niedrigen Widerständen, was in Bezug auf einen niedrigen Zellwiderstand vorteilhaft ist. Die Porosität der Trennschicht kann größer als 0,20, größer als 0,30, größer als 0,40, größer als 0,50, größer als 0,60, größer als 0,70, größer als 0,80, oder größer als 0,90 sein. Die Porosität der Trennschicht kann kleiner als 0,99, kleiner als 0,95, oder kleiner als 0,90 sein. **In** einer Ausführungsform liegt die Porosität der Trennschicht zwischen 0,2 und 0,4.

Die Poren können in den einzelnen Folienschichten homogen verteilt sein, es kann jedoch auch eine graduelle Porengrößenverteilung und/oder Porositätsverteilung vorgesehen sein, beispielsweise wenn im Herstellungsverfahren ein Vorfällungsmittel eingesetzt wird. Dann können die oberflächennahen Teile der Folie eine andere Porosität mit unterschiedlich großen Poren aufweisen als die weiter innenliegenden Teile. Die oben genannten Angaben der Porosität beziehen sich insbesondere auf die durchschnittliche Porosität der Folienschichten.

Die durchschnittliche Porengröße der Folienschichten und der Trennschicht kann unabhängig voneinander zwischen 100 nm und 5 µm liegen, in anderen Ausführungsbeispielen zwischen 500 nm und 2 µm, in anderen Ausführungsbeispielen zwischen 200 nm und 1 µm.

Die erfindungsgemäße Folie kann zu einem Elektrodenmaterial für ein Energiespeichermedium weiterverarbeitet werden. Hierzu kann auf die Außenflächen der Folie eine metallische Stromableitungsschicht aufgetragen werden, beispielsweise durch Aufkaschieren oder durch Aufdampfen. Die Stromableitungsschichten können aus Aluminium, Kupfer, oder sonstigen für Li-Ionen-Akkus bekannten Materialien gebildet sein.

Gegebenenfalls können die mit dem erfindungsgemäßen Verfahren hergestellten mehrschichtigen Folien zu einem mehrlagigen Folienverbund verarbeitet werden, um eine Multilayer-Batteriezelle mit erhöhter Zellspannung zu bilden. Die erfindungsgemäße Batteriezelle kann also gegebenenfalls zwei, drei, vier, fünf oder mehr Schichten einer erfindungsgemäßen porösen mehrschichtigen Folie umfassen.

Dadurch können Energiespeichermedien mit besonders hohen Energiedichten hergestellt werden, wobei die Mengen an benötigten Metallen zur Stromableitung weiter reduziert werden können. Ein Elektrodenmaterial, das einen derartigen mehrlagigen Folienverbund umfasst kann insbesondere nur auf seinen äußersten Schichten mit Stromableitungsschichten versehen werden. Der Verzicht auf eine metallische Beschichtung der innenliegenden porösen Folien ist dann möglich, wenn die Oberfläche der Folien undurchlässig für Lithium-Ionen ist, was beispielsweise bei der Verwendung bestimmter Vorfällungsmittel der Fall ist.

Das mehrlagige Elektrodenmaterial kann anschließend in ein Energiespeichermedium verbaut werden. Hierzu werden zwei Kontaktierungselemente am Elektrodenmaterial angebracht und das Material wird mit einem Elektrolyten beladen. Der Elektrolyt füllt die Poren der Folie und ermöglicht die Leitung von Li⁺-Ionen.

In Zusammenhang mit der vorliegenden Erfindung kann der Begriff "gelöst" bedeuten, dass ein Bestandteil oder ein Stoff in einem Mittel, insbesondere in einem Lösungsmittel, vollständig solubilisiert ist, also dass dieser Bestandteil oder dieser Stoff nicht in fester Form vorliegt.

In Zusammenhang mit der vorliegenden Erfindung kann der Begriff "unlöslich" bedeuten, dass ein Bestandteil oder ein Stoff in einer Flüssigkeit nicht löslich ist. Gegebenenfalls können vernachlässigbare Bestandteile, wie etwa weniger als 0,5%, bevorzugt weniger als 0,1%, weiter bevorzugt weniger als 0,01% löslich sein, damit ein Bestandteil oder ein Stoff als unlöslich gilt.

In Zusammenhang mit der vorliegenden Erfindung kann der Begriff "elektrisch leitend" bedeuten, dass ein Material oder ein Stoff eine elektrische Leitfähigkeit von mehr als 10⁴ S/m, bevorzugt mehr als 10⁶ S/m, weiter bevorzugt mehr als 10⁶ S/m, aufweist.

In Zusammenhang mit der vorliegenden Erfindung können die Begriffe "elektrisch isolierend" oder "elektrisch nicht leitend" bedeuten, dass ein Material oder ein Stoff eine elektrische Leitfähigkeit von weniger als 10⁻⁶ S/m, bevorzugt weniger als 10⁻⁷ S/m, weiter bevorzugt weniger als 10⁻⁸ S/m, aufweist.

In Zusammenhang mit der vorliegenden Erfindung können die Begriffe "Folie", "Film", "Membran" und dergleichen synonym verwendet werden.

Nachfolgend werden weitere optionale Aspekte der Erfindung angegeben. Diese Aspekte können einzeln oder in beliebiger Kombination in Zusammenhang mit der vorliegenden Erfindung vorgesehen sein.

Gemäß einem ersten optionalen Aspekt ist das Verfahren ein kontinuierliches Verfahren.

Gemäß einem zweiten optionalen Aspekt ist der Zuschlagstoff in der Basismischung oder den Basismischungen suspendiert.

Gemäß einem dritten optionalen Aspekt ist das wenigstens eine Leitfähigkeitsmittel in der Basismischung oder den Basismischungen suspendiert.

Gemäß einem vierten optionalen Aspekt sind der Zuschlagstoff und/oder das Leitfähigkeitsmittel aus Nanopartikeln gebildet oder umfasst Nanopartikel.

Gemäß dem vierten erfindungsgemäßen Aspekt können die Nanopartikel Silicium-Nanopartikel sein, die bevorzugt eine durchschnittliche Größe von 10 nm bis 200 nm, weiter bevorzugt von 50 nm bis 100 nm, aufweisen.

Gemäß einem fünften optionalen Aspekt weisen die Basismischungen unterschiedliche Zusammensetzungen auf.

Gemäß einem sechsten optionalen Aspekt ist wenigstens ein Bindemittel ein vernetzbares Polymer. Gegebenenfalls ist das vernetzbare Polymer bei Aufnahme eines Elektrolyten quellbar.

Gemäß einem siebenten optionalen Aspekt ist das Bindemittel ganz oder zumindest teilweise ein Polyelektrolyt mit Carbon- und/oder Sulfonsäuregruppen.

Gemäß einem achten optionalen Aspekt ist das Verfahren zum Bilden der Folie aus dem Folien-Precursormaterial ein Phaseninversionsverfahren zur Koagulation des Bindemittels.

Gemäß einem neunten optionalen Aspekt erfolgt die Extrusion der Basismischung(en) mit einer Breitschlitzdüse bzw. mit mehreren Breitschlitzdüsen oder einer Mehrkanalbreitschlitzdüse. Bevorzugt beträgt die Breite der Düse(n) zwischen 5 cm und 200 cm, besonders bevorzugt zwischen 10 cm und 50 cm.

Gemäß einer Ausführungsform des neunten optionalen Aspekts kann ein Vorfällungsmittel in weiteren Breitschlitzdüsen bzw. in weiteren Kanälen der Mehrkanalbreitschlitzdüse bereitgestellt werden.

Gemäß einem zehnten optionalen Aspekt kann die Temperatur des Fällungsmittels zwischen 0°C und 80°C liegen, in anderen Aspekten zwischen 10°C und 50°C, in anderen Aspekten zwischen 40°C und 80°C, in anderen Aspekten zwischen 30°C und 60°C.

Gemäß einem elften optionalen Aspekt kann die Extrusionsgeschwindigkeit des Folien-Precursorfilms zwischen 2 m/min und 50 m/min betragen.

Gemäß einem zwölften optionalen Aspekt kann das in Kontakt bringen in Schritt (b) des Verfahrens das Einbringen oder das Eintauchen des Precursorfilms in das Fällungsmittel umfassen.

Gemäß einem dreizehnten optionalen Aspekt kann vor Schritt (a) des Verfahrens eine Vorbehandlung der Basismischung(en) durchgeführt werden.

Gemäß dem dreizehnten Aspekt kann die Vorbehandlung eines oder mehrere der folgenden umfassen:
- Deagglomeration der Basismischung(en), beispielsweise unter Verwendung eines Zahnscheibenrührers und/oder mittels Ultraschallbehandlung,
- Filtration der Basismischung(en), beispielsweise unter Verwendung eines Kantenspaltfilters, eines Kerzenfilters, eines Gewebefilters, oder dergleichen,
- Entgasung der Basismischung mittels Vakuum, entweder direkt oder über eine Membran.

Gemäß einem vierzehnten optionalen Aspekt kann das Verfahren zusätzlich einen oder mehrere der folgenden Schritte umfassen:
- Waschschritt, gegebenenfalls Führen des Folienmaterials über Umlenkrollen oder Walzen, gegebenenfalls Führen einer Waschlösung im Gegenstrom zur Bewegung des Folienmaterials
- Trocknungsschritt zum Verdampfen von Waschmitteln, Lösungsmitteln, Vorfällungsmitteln, Fällungsmitteln und anderen volatilen Bestandteilen,
- Verdichtungsschritt zur Einstellung der Porosität der Folien mittels Temperaturbehandlung und/oder Verpressung,
- Aufrollschritt zum Bilden einer Folienrolle, gegebenenfalls unter Anordnung eines Spacermaterials zwischen den einzelnen Folienlagen.

Gemäß einem fünfzehnten optionalen Aspekt kann das dritte Basismaterial einen elektrisch nicht leitenden oder elektrisch inaktiven Zuschlagstoff umfassen, beispielsweise Siliziumoxid und/oder Aluminiumoxid.

Gemäß einem sechzehnten optionalen Aspekt ist die erfindungsgemäße Folie ein Polymerverbundmaterial.

Gemäß einem siebzehnten optionalen Aspekt ist die erfindungsgemäße Folie ein Bahnmaterial.

Gemäß einem achtzehnten optionalen Aspekt ist die erfindungsgemäße Folie eine freitragende Folie mit einer schaumartigen Struktur zwischen den Partikeln der Zuschlagstoffe.

Gemäß einem neunzehnten optionalen Aspekt umfasst das Elektrodenmaterial eine Stromableitungsschicht aus Kupfer bzw. Aluminium, gegebenenfalls mit einer Dicke von weniger als 20 µm, bevorzugt von weniger als 5 µm, und besonders bevorzugt von weniger als 1 µm.

Gemäß einem zwanzigsten optionalen Aspekt wird wenigstens eine Stromableitungsschicht durch Metallbedampfung hergestellt, wobei das Bedampfungsverfahren gegebenenfalls kontinuierlich durchgeführt wird.

Gemäß einem einundzwanzigsten optionalen Aspekt wird wenigstens eine Stromableitungsschicht durch eine galvanische Metallbeschichtung hergestellt.

Gemäß einem zweiundzwanzigsten optionalen Aspekt werden am erfindungsgemäßen Energiespeichermedium die Seitenflächen durch Aufschmelzen des Bindemittels oder durch Aufbringen eines Klebstoffs versiegelt.

Gemäß einem dreiundzwanzigsten optionalen Aspekt sind die Kontaktierungselemente aus einem Nickelstreifen und/oder aus Aluminiumstreifen gebildet, die mit leitfähigem Klebstoff mit dem Elektrodenmaterial verbunden sind oder mit dem Elektrodenmaterial verschweißt sind.

Nachfolgend wird die Erfindung anhand von exemplarischen Ausführungsbeispielen im Detail erläutert. **In** Zusammenhang mit den Ausführungsbeispielen zeigen:
Fig. 1 ein schematisches Prozessflussdiagramm eines zweiten Ausführungsbeispiels eines erfindungsgemäßen Verfahrens;
Fig. 2: eine schematische Darstellung eines Energiespeichermediums, das eine durch aus Verfahren des zweiten Ausführungsbeispiels hergestellte Folie umfasst.

Sofern untenstehend anders bezeichnet, sind in den Figuren die folgenden Elemente dargestellt: Lösebehälter 1, Homogenisator 2, Kerzenfilter 3, Vorratsbehälter 4, Leitung 5, Extrudiervorrichtung 6, Leitung 7, Fällflüssigkeits-Behälter 8, Fällbad 9, Umwälzpumpe 10, Umlenkrolle 11, Waschbad 12, Trocknungsofen 13, Wickelvorrichtung 14, Elektrodenmaterial 15, Kontaktierungselement 16, Zellgehäuse 17, Anodenschicht 18, Kathodenschicht 19, Trennschicht 20, Folien-Precursorfilm 21, Folie 22, Rolle 23, Metallschicht 24, Entgasungsvorrichtung 25.

### Beispiel 1

Gemäß einem ersten Ausführungsbeispiel ist ein Verfahren zur Herstellung einer einschichtigen porösen Folie vorgesehen. Es werden zwei dieser Folien verwendet, um ein Energiespeichermedium herzustellen.

Die Zusammensetzungen der Basismischungen der beiden Folien sind in Tabelle 1 angegeben.

**Tabelle 1**

| | **Erste Folie (Anodenfolie)** | **Gewichtsanteil (%)** | **Zweite Folie (Kathodenfolie)** | **Gewichtsanteil (%)** |
|---|---|---|---|---|
| Lösungsmittel | Dimethylacetamid | 59,7 | Dimethylacetamid | 53,2 |
| Bindemittel | Polyvinylidendifluorid | 4,2 | Polyvinylidendifluorid | 4,7 |
| Elektroaktives Mittel | Graphit | 35,7 | Lithiumeisenphosphat | 40,7 |
| Leitfähigkeitsmittel | Ruß | 0,4 | Ruß | 1,4 |

Der Graphit weist einen mittleren Partikeldurchmesser von etwa 15 µm auf, das Lithiumeisenphosphat von etwa 2,0 µm und der Ruß von etwa 0,05 µm.

Es werden zwei Basismischungen hergestellt, wobei zuerst das pulverförmige Bindemittel mit den unlöslichen partikulären Feststoffen, also dem elektroaktiven Mittel und dem Leitfähigkeitsmittel, trocken gemischt wird. Dann wird die so hergestellte Pulvermischung zum Lösungsmittel gegeben. Die Mischung wird homogenisiert und anschließend durch ein Ultraschallsieb filtriert, um gegebenenfalls enthaltene Agglomerate abzutrennen, die eine Größe von über etwa 50 µm aufweisen. Die Suspension wird im Vakuum entgast.

Jede Basismischung wird mit einer Rakel auf eine Glasplatte aufgebracht, um einen Folien-Precursorfilm mit einer einzigen Teilschicht zu bilden. Die Dicke der so erzeugten ersten Teilschicht beträgt etwa 250 µm für die Anodenfolie und etwa 350 µm für die Kathodenfolie.

Die Glasplatte mit dem einschichtigen Folien-Precursorfilm wird dann bei Raumtemperatur in ein Bad mit Fällungsmittel getaucht, wobei deionisiertes Wasser als Fällungsmittel verwendet wird. Nach einer Verweilzeit von etwa 10 min im Fällungsmittel wird die Glasplatte aus dem Fällbad entnommen. Die Folien mit Abmessungen von etwa 30x20 cm können manuell von der Glaspatte abgenommen werden. Nach einem Waschschritt in einem Waschbad mit deionisiertem Wasser werden die Folien an der Luft getrocknet.

Die erhaltenen Folien werden mittels Rasterelektronenmikroskopie charakterisiert. Es wird eine durchschnittliche Porengröße von etwa 1,5 µm bestimmt. Die Porosität des erzeugten Films beträgt etwa 0,65. Die Dicke der Folien betragen etwa 145 µm für die Anodenfolie und 150 µm für die Kathodenfolie. Probenstücke der einschichtigen Anoden- und Kathodenfolien mit einer Größe von 70 mm x 70 mm werden zwischen zwei planparallelen Stahlplatten bei Raumtemperatur in einer Hebelpresse mit einem Druck von 0,3 to/cm² verpresst. Die Dicke der Anodenfolie nach dem Verpressen beträgt in etwa 70 µm mit einer Porosität von etwa 0,32, die Dicke der Kathodenfolie beträgt etwa 100 µm mit einer Porosität von etwa 0,45. Die Folien verlieren dabei nicht deren gute mechanischen Eigenschaften und Flexibilität.

Das Flächengewicht der Anodenfolie betragt dabei in etwa 100 g/m², das Flächengewicht der Kathodenfolie beträgt dabei etwa 180 g/m², das ist zwei- bis dreimal so viel wie das Flächengewicht von Anoden- bzw. Kathodenbeschichtungen hergestellt nach dem klassischen Verfahren mit einer Abdampfung des Lösungsmittels in einem Bandtrockner.

Aus den Folien wird ein Elektrodenmaterial gebildet, indem zwischen einer Anodenfolie und einer Kathodenfolie eine Trennschicht aus einer kommerziell erhältlichen Polyethylen-Membran (z. B. von Celgard) angeordnet wird. Als Stromableitungsschicht werden auf der Oberfläche der Kathodenfolie eine Aluminium-Folie und auf der Oberfläche der Anodenfolie eine Kupfer-Folie angeordnet.

Das Elektrodenmaterial wird in im Stand der Technik bekannter Form in eine Pouchzelle als Energiespeichermedium verarbeitet. Die erhaltenen Zellen weisen eine typische Zellspannung auf, mehrere Lade- und Entladezyklen sind möglich.

### Beispiel 2

Gemäß einem zweiten Ausführungsbeispiel ist ein weiteres Verfahren zur Herstellung einer einschichtigen porösen Folie vorgesehen. Es werden zwei dieser Folien verwendet, um ein Energiespeichermedium herzustellen.

Die Zusammensetzungen der Basismischungen der beiden Folien sind in Tabelle 2 angegeben.

**Tabelle 2**

| | **Erste Folie (Anodenfolie)** | **Gewichtsanteil (%)** | **Zweite Folie (Kathodenfolie)** | **Gewichtsanteil (%)** |
|---|---|---|---|---|
| Lösungsmittel | Dimethylacetamid | 53,5 | Dimethylacetamid | 53,4 |
| Bindemittel | Polyvinylidendifluorid | 4,7 | Polyvinylidendifluorid | 4,6 |
| Elektroaktives Mittel | Graphit | 41,4 | LiNCM523 (LithiumNickel0,5 Cobalt0,2Mangan 0,3Oxid) | 39,1 |
| Leitfähigkeitsmittel | Ruß | 0,5 | Ruß | 2,8 |

Der Graphit weist einen mittleren Partikeldurchmesser von etwa 1,5 µm auf, das Lithiumnickelcobaltmanganoxid von etwa 4,0 µm und der Ruß von etwa 0,05 µm.

Es werden zwei Basismischungen hergestellt, wobei zuerst das pulverförmige Bindemittel mit den unlöslichen partikulären Feststoffen, also dem elektroaktiven Mittel und dem Leitfähigkeitsmittel, trocken gemischt wird. Dann wird die so hergestellte Pulvermischung zum Lösungsmittel gegeben. Die Mischung wird homogenisiert und anschließend durch ein Ultraschallsieb filtriert, um gegebenenfalls enthaltene Agglomerate abzutrennen, die eine Größe von über etwa 50 µm aufweisen. Die Suspension wird im Vakuum entgast.

Jede Basismischung wird mit einer Rakel auf eine Glasplatte aufgebracht, um einen Folien-Precursorfilm mit einer einzigen Teilschicht zu bilden. Die Dicke der so erzeugten ersten Teilschicht beträgt etwa 140 µm für die Anodenfolie und etwa 210 µm für die Kathodenfolie.

Die Glasplatte mit dem einschichtigen Folien-Precursorfilm wird dann bei Raumtemperatur in ein Bad mit Fällungsmittel getaucht, wobei deionisiertes Wasser als Fällungsmittel verwendet wird. Nach einer Verweilzeit von etwa 10 min im Fällungsmittel wird die Glasplatte aus dem Fällbad entnommen. Die Folien mit Abmessungen von etwa 30x20 cm können manuell von der Glaspatte abgenommen werden. Nach einem Waschschritt in einem Waschbad mit deionisiertem Wasser werden die Folien an der Luft getrocknet.

Die erhaltenen Folien werden mittels Rasterelektronenmikroskopie charakterisiert. Es wird eine durchschnittliche Porengröße von etwa 1,5 µm bestimmt. Die Porosität der erzeugten Filme beträgt etwa 0,55 für die Kathodenfolie und 0,62 für die Anodenfolie. Die Dicken der Folien betragen etwa 100 µm für die Anodenfolie und 100 µm für die Kathodenfolie. Probenstücke der einschichtigen Anoden- und Kathodenfolien mit einer Größe von 70 mm x 70 mm werden zwischen zwei planparallelen Stahlplatten bei Raumtemperatur in einer Hebelpresse mit einem Druck von 0,1 to/cm² verpresst. Die Dicke der Anodenfolie nach dem Verpressen beträgt in etwa 85 µm mit einer Porosität von etwa 0,56, die Dicke der Kathodenfolie beträgt etwa 85 µm mit einer Porosität von etwa 0,47. Die Folien verlieren dabei nicht deren gute mechanischen Eigenschaften und Flexibilität.

Das Flächengewicht der Anodenfolie betragt dabei in etwa 80 g/m², das Flächengewicht der Kathodenfolie beträgt dabei etwa 139 g/m², das ist etwa doppelt so hoch wie das Flächengewicht von Anoden- bzw. Kathodenbeschichtungen hergestellt nach dem klassischen Verfahren mit einer Abdampfung des Lösungsmittels in einem Bandtrockner.

Aus den Folien wird ein Elektrodenmaterial gebildet, indem zwischen einer Anodenfolie und einer Kathodenfolie eine Trennschicht aus einer kommerziell erhältlichen Polyethylen-Membran (z. B. von Celgard) angeordnet wird. Als Stromableitungsschicht werden auf der Oberfläche der Kathodenfolie eine Aluminium-Folie und auf der Oberfläche der Anodenfolie eine Kupfer-Folie angeordnet.

Das Elektrodenmaterial wird in im Stand der Technik bekannter Form in eine Pouchzelle als Energiespeichermedium verarbeitet. Die erhaltenen Zellen weisen eine typische Zellspannung auf, mehrere Lade- und Entladezyklen sind möglich.

### Beispiel 3

Gemäß einem zweiten Ausführungsbeispiel ist ein Verfahren zur Herstellung einer mehrschichtigen porösen Folie vorgesehen. Diese Folie wird verwendet, um ein Energiespeichermedium herzustellen.

In einem erfindungsgemäßen Schritt des Verfahrens wird ein Folien-Precursorfilm hergestellt, der aus drei Teilschichten besteht, wobei jede Teilschicht aus einer Basismischung gebildet ist. Die Zusammensetzungen der Basismischungen sind in Tabelle 3 angegeben.

**Tabelle 3**

| | **Erste Basismischung (Anodenschicht)** | **Gew.-%** | **Zweite Basismischung (Kathodenschicht)** | **Gew.-%** | **Dritte Basismischung (Trennschicht)** | **Gew.-%** |
|---|---|---|---|---|---|---|
| Lösungsmittel | Dimethylacetamid | 59,7 | Dimethylacetamid | 53,2 | Dimethylacetamid | 92,0 |
| Bindemittel | Polyvinylidendifluorid | 4,2 | Polyvinylidendifluorid | 4,7 | Polyvinylidendifluorid | 8,0 |
| Elektroaktives Mittel | Graphit | 35,7 | Lithiumeisenphosphat | 40,7 | -- | 0 |
| Leitfähigkeitsmittel | Ruß | 0,4 | Ruß | 1,4 | -- | 0 |

Der Graphit weist einen mittleren Partikeldurchmesser von etwa 15 µm auf, das Lithiumeisenphosphat von etwa 2 µm und der Ruß von etwa 0,05 µm.

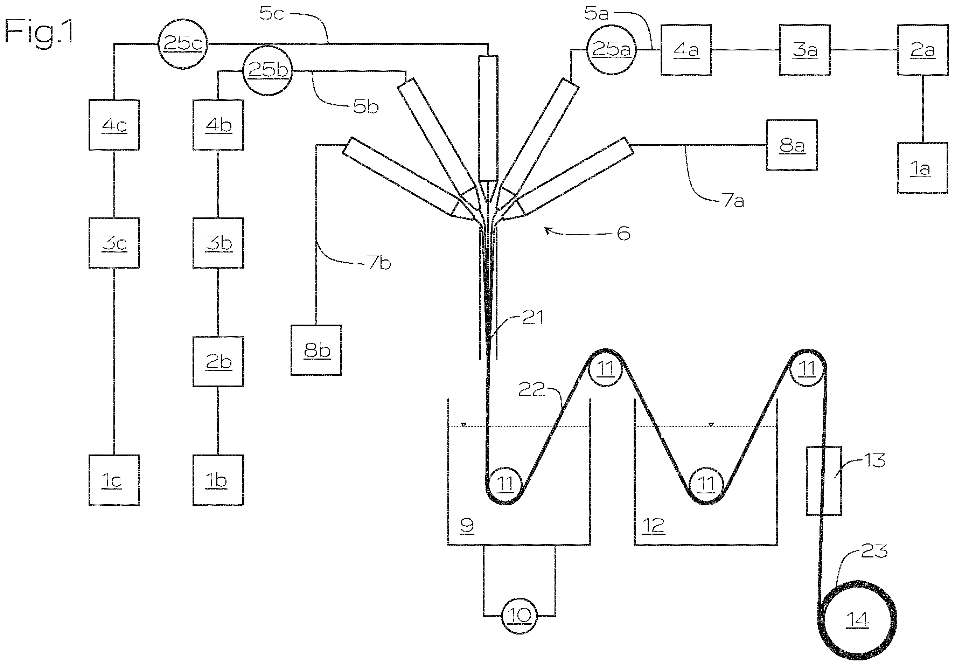

Das erfindungsgemäße Herstellungsverfahren gemäß diesem zweiten Ausführungsbeispiel ist in einem Prozessflussdiagramm in Fig. 1 veranschaulicht.

Die Basismischungen werden hergestellt, indem zuerst das Bindemittel vollständig im Lösungsmittel gelöst wird. Die Herstellung der Bindemittel-Lösungen erfolgt in den Lösebehältern 1a, 1b, 1c. Im Fall der ersten und der zweiten Basismischung werden anschließend die unlöslichen partikulären Feststoffe, also das elektroaktive Mittel und das Leitfähigkeitsmittel, zugegeben und die Mischung wird in den Homogenisatoren 2a, 2b homogenisiert. Alle drei Basismischungen werden anschließend über Kerzenfilter 3a, 3b, 3c filtriert, um gegebenenfalls enthaltene Agglomerate oder anderweitige Feststoffe mit einer Partikelgröße von über 30 µm abzutrennen.

Dann werden die hergestellten Basismischungen in Vorratsbehälter 4a, 4b, 4c eingebracht, wo sie bis zur weiteren Verarbeitung gelagert werden können. In den Vorratsbehältern 4a, 4b, 4c sind jeweils Rührwerke vorgesehen, um die Homogenität der Basismischungen zu gewährleisten und ein Absetzen von partikulären Bestandteilen zu verhindern. Die Basismischungen werden in getrennten Leitungen 5a, 5b, 5c zu einer Extrudiervorrichtung 6 geleitet, die als Mehrschlitz-Extrudator mit fünf Breitschlitzdüsen mit einer Breite von jeweils 15 cm ausgebildet ist. In den Leitungen 5a, 5b und 5c befinden sich jeweils Entgasungsvorrichtungen 25a, 25b, 25c, in diesem Falle Entgasungsmembranen.

Die Basismischungen werden in die drei zentralen Düsen eingebracht, wobei die dritte Basismischung mittig zwischen der ersten Basismischung und der zweiten Basismischung angeordnet wird.

Die beiden äußersten Düsen sind über Leitungen 7a, 7b mit Fällflüssigkeits-Behältern 8a, 8b verbunden. Die Fällflüssigkeit ist in diesem Ausführungsbeispiel deionisiertes Wasser und wird während des Extrudierens mit den Oberflächen des aus den Extrudiervorrichtung 6 austretenden Folien-Precursorfilms 21 in Kontakt gebracht.

Hierdurch kommt es zu einer Vorfällung des Bindemittels noch vor Kontakt mit dem eigentlichen Fällbad 9.

Der Folien-Precursorfilm 21 wird freistehend in das Fällbad 9 eingebracht, in welchem die Fällflüssigkeit enthalten ist. **In** diesem Falle ist die Fällflüssigkeit deionisiertes Wasser mit etwa 2% des Lösungsmittels Dimethylacetamid. Die Fällflüssigkeit wird mittels einer Umwälzpumpe 10 im Fällbad umgewälzt und in Bewegung versetzt. Überschüssige Fällflüssigkeit verlässt das Fällbad 9 über einen Überlauf und wird abgepumpt und entsorgt. Die Temperatur des Fällbades beträgt etwa 40°C.

Der die durch die Koagulation des Bindemittels entstandene poröse dreischichtige Folie 22 wird über eine Umlenkrolle 11 aus dem Fällbad geleitet und über eine weitere Umlenkrolle 11 in ein Waschbad 12 überführt. Anschließend wird die Folie 22 in einem Trocknungsofen 13 bei etwa 80°C getrocknet und mit einer Wickelvorrichtung 14 auf eine Rolle 23 gewickelt. Das so erhaltene Bahnmaterial kann der weiteren Verwendung zugeführt werden.

Die erhaltenen Folien werden mittels Rasterelektronenmikroskopie charakterisiert. Es wird eine durchschnittliche Porengröße von etwa 1,5 µm bestimmt. Die Porosität des erzeugten Mehrschichtfilmes beträgt etwa 0,65 für die Anoden- und die Kathodenschicht und etwa 0,85 für die dazwischenliegende Trennschicht. Die Gesamtdicke der Folie beträgt etwa 350 µm. Probenstücke der dreischichtigen Folie mit einer Größe von 70 mm x 70 mm werden zwischen zwei planparallelen Stahlplatten bei Raumtemperatur in einer Hebelpresse mit einem Druck von 0,3 to/cm² verpresst. Die Dicke der Folie nach dem Verpressen beträgt in etwa 180 µm, wobei die Anodenschicht etwa 70 µm dick ist, die Dicke der Kathodenfolie etwa 100 µm beträgt und die Trennschicht in etwa eine Dicke von 10 µm aufweist. Die Folien verlieren beim Verpressen nicht deren gute mechanische Eigenschaften und Flexibilität.

Das Flächengewicht der Mehrschichtfolie beträgt dabei in etwa 290 g/m².

Die äußeren Folienschichten, also die Kathodenschicht und die Anodenschicht, weisen eine Porosität von etwa 0,45 bzw. 0,32 auf. Die mittleren Porendurchmesser betragen etwa 1,5 µm. Die innere Folienschicht, also die Trennschicht, weist eine Porosität von etwa 0,65 auf. Der mittlere Porendurchmesser beträgt etwa 2,5 µm.

Zur Bildung eines Elektrodenmaterials werden 15x10cm große Stücke des Bahnmaterials beidseitig mit einer etwa 1 µm dicken Metallschicht bedampft. Die Oberfläche der Anodenschicht erhält eine Kupferbeschichtung, während die Oberfläche der Kathodenschicht eine Aluminiumbeschichtung erhält.

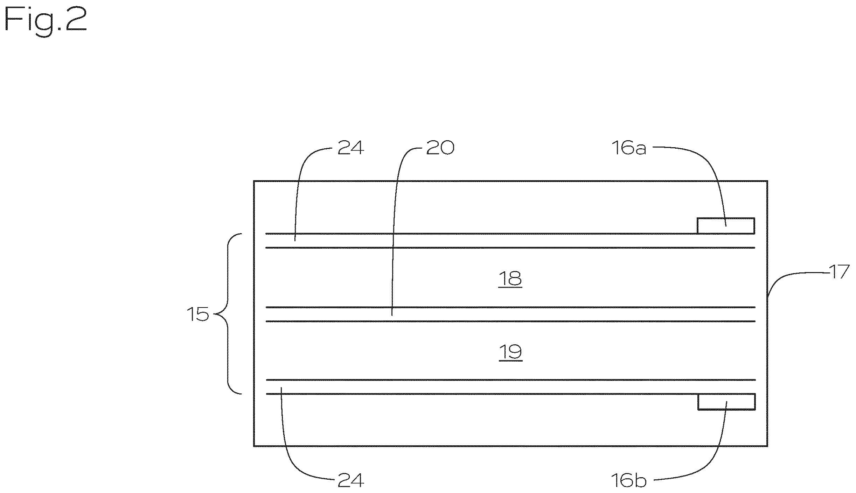

Die so hergestellten Elektrodenmaterialien können zu Energiespeichermedien weiter verarbeitet werden. Ein exemplarisches Energiespeichermedium ist in Fig. 2 dargestellt. Bei Fig. 2 handelt es sich lediglich um eine skizzierte Darstellung eines Energiespeichermediums, wobei die tatsächlichen Größenverhältnisse nicht maßstabsgetreu abgebildet sind.

Das Elektrodenmaterial 15 wird an der Metallschicht 24 der Anoden- und der Kathodenseite mit Kontaktierungselementen 16 a, 16b kontaktiert, welche an der Anodenseite als Nickel-Elektroden ausgebildet sind, während an der Kathodenseite Aluminium-Kontaktierungselemente zum Einsatz kommen. Diese Anordnung wird luftdicht in einem Zellgehäuse 17 verpackt. Das Elektrodenmaterial 15, mit der Anodenschicht 18, der Kathodenschicht 19 und der Trennschicht 20 wird mit einem Elektrolyten beladen der freie Li⁺-Ionen als Landungsträger bereitstellt. Die Benetzung erfolgt durch die Kapillarwirkung der Poren in der Folie.

Im Vergleich zu nach dem Stand der Technik hergestellten Energiespeichermedien sind die Herstellungskosten für die Produktion dieses erfindungsgemäßen Energiespeichermediums etwa 20 bis 25% niedriger. Die massenbezogene Speicherdichte ist über 50% höher als jene herkömmlicher Energiespeichermedien und der leistungsbezogene Flächenbedarf ist mehr als 20% geringer.

Durch das erfindungsgemäße Verfahren und die daraus erhaltenen Erzeugnisse ergeben sich gegebenenfalls folgende weitere Vorteile gegenüber dem Stand der Technik:
- Die Porosität der Schichten ist unabhängig von der Partikelgröße der verwendeten Zuschlagstoffe. Daher ist die Verwendung von Nanopartikeln als Zuschlagstoffe möglich, um Zellen für hohe Lade- und Entladeströme herzustellen und hohe Diffusionsgeschwindigkeiten der Lithium-Ionen in den Poren zu ermöglichen.
- Durch den Ausfällprozess des Binders im Fällungsmittel entsteht eine schwammartige elastische Struktur zwischen den Zuschlagstoffen, die den Teilschichten Festigkeit und Zähigkeit verleiht. Risse bei der Herstellung und im Betrieb der Materialien sind stark vermindert.
- Die Trennschicht kann besonders dünn und hochporös ausgebildet sein, da diese als Teilschicht vorliegt und als solche nicht mechanisch belastbar sein muss.
- Durch die Reduktion des Metallanteiles ergibt sich eine Gewichtsreduktion der Zelle.
- Die verringerte Dicke der Trennschicht und eine Erhöhung der Porosität der Trennschicht führen zu einer Reduktion des ohmschen Zellinnenwiderstandes und damit zu einer geringeren Verlustleistung beim Laden und Entladen der Batterie.
- Der geringere Zellinnenwiderstand erlaubt eine schnellere Ladung im Vergleich zum Stand der Technik bei geringerer Erwärmung der Zelle. Gleichzeitig sind auch schnellere Entladungen (High Power-Zellen) realisierbar.
- Das Verfahren erlaubt die Verwendung von Materialien mit hohen Erweichungspunkten und Temperaturbeständigkeiten wie z. B. aromatische Polyimide, Polyamide, Polyetherketone oder Polyethersulfone für die Herstellung von Separatoren und Elektroden. Damit einhergehend ist eine erhöhte Sicherheit während des Betriebs durch die Erhöhung der Melt-Down-Temperatur gegeben.

## Patentansprüche

1. **Verfahren** zur Herstellung einer mehrschichtigen porösen Folie, umfassend folgende Schritte:
a. Bereitstellen einer fließfähigen ersten Basismischung für eine erste Folienschicht der Folie, wobei die erste Basismischung ein Lösungsmittel, einen im Lösungsmittel unlöslichen Zuschlagstoff und ein im Lösungsmittel gelöstes polymeres Bindemittel umfasst, Bereitstellen einer fließfähigen zweiten Basismischung zum Bilden einer zweiten Folienschicht, wobei die zweite Basismischung ein Lösungsmittel, einen im Lösungsmittel unlöslichen Zuschlagstoff, sowie ein im Lösungsmittel gelöstes polymeres Bindemittel umfasst, und Bereitstellen einer fließfähigen dritten Basismischung zum Bilden einer Trennschicht, wobei die dritte Basismischung ein Lösungsmittel, sowie ein im Lösungsmittel gelöstes polymeres Bindemittel umfasst,
b. Bilden eines Folien-Precursorfilms, wobei der Folien-Precursorfilm wenigstens eine Teilschicht aus der ersten Basismischung, eine zweite Teilschicht aus der zweiten Basismischung und eine dritte Teilschicht aus der dritten Basismischung umfasst, wobei die Teilschichten in der Haupterstreckungsrichtung des Folien-Precursorfilms parallel zueinander verlaufen,
c. In Kontakt bringen des Folien-Precursorfilms mit einem Fällungsmittel, wobei das Lösungsmittel der ersten Basismischung im Fällungsmittel löslich ist,
wobei das Bindemittel der Basismischungen in dem Fällungsmittel zumindest teilweise unlöslich ist, wobei das Bindemittel ausgefällt wird, sodass die poröse Folie gebildet wird,
**dadurch gekennzeichnet, dass** der Folien-Precursorfilm durch Co-Extrudieren der Basismischungen gebildet wird, und dass die erste Basismischung zur Bildung eines Anodenmaterials ausgebildet ist, die zweite Basismischung zur Bildung eines Kathodenmaterials ausgebildet ist, und die dritte Basismischung zwischen der ersten Basismischung und der zweiten Basismischung angeordnet ist und im Wesentlichen frei von elektrisch leitenden Bestandteilen bzw. elektrisch nicht leitend ist.

2. Verfahren nach Anspruch 1, **dadurch gekennzeichnet, dass** das polymere Bindemittel der Basismischung(en) Polysulfone, Polyimide, Polystyrol, Carboxymethylcellulose, Polyetherketone, Polyether, Polyelektrolyte, fluorierte Polymere, insbesondere Polyvinilydenfluorid, oder eine Mischung von zumindest zwei davon umfasst oder daraus besteht, und/oder dass das Lösungsmittel der Basismischung(en) Dimethylacetamid, Dimethylformamid, N-Methylpyrrolidon, N-Ethylpyrrolidon, Sulfolan, Dimethylsulfoxid, Methanol, Etahnol, Isopropanol, Wasser oder eine Mischung von zumindest zwei davon umfasst oder daraus besteht.

3. Verfahren nach Anspruch 1 oder 2, **dadurch gekennzeichnet, dass** der Zuschlagstoff ein elektroaktives Mittel ist.

4. Verfahren nach Anspruch 3, **dadurch gekennzeichnet,**
- **dass** das elektroaktive Mittel ein Lithiumoxid und oder ein Lithiumsulfid und oder ein Lithiumfluorid und/oder ein Lithiumphosphat umfasst oder daraus besteht, insbesondere Lithium-Mangandioxid, Lithium-Cobaltdioxid, Lithium-Nickel-Mangan-Cobaltdioxid, Lithium-Nickel-Cobalt-Aluminiumoxid, Lithium-Nickel-Mangan-Spinell, Lithium-Nickel-Mangandioxid, Lithium-Eisenphosphat, Lithium-Manganphospat, Lithium-Cobaltphosphat oder eine beliebige Mischung daraus, und/oder
- **dass** das elektroaktive Mittel Graphit, Graphen, Silicium-Nanopartikel, Lithiumtitanat, Zinn oder eine Mischung davon umfasst oder daraus besteht.

5. Verfahren nach einem der Ansprüche 1 bis 4, **dadurch gekennzeichnet, dass** die Basissuspension zusätzlich ein Leitfähigkeitsmittel umfasst, wobei das Leitfähigkeitsmittel leitfähigen Kohlenstoff, insbesondere Ruß, Graphen oder Graphit, umfasst oder daraus besteht, und/oder dass das Fällungsmittel Wasser, wenigstens einen Alkohol, beispielsweise Methanol, Ethanol, iso-Propanol, das Lösungsmittel einer Basismischung, oder eine Mischung daraus umfasst oder daraus gebildet ist.

6. Verfahren nach einem der Ansprüche 1 bis 5, **dadurch gekennzeichnet, dass** das Bilden des Folien-Precursorfilms das trägerlose Extrudieren der Basismischung(en), bevorzugt das trägerlose Co-Extrudieren der ersten Basismischung, der zweiten Basismischung und der dritten Basismischung, umfasst, und/oder dass der Folien-Precursorfilm nach Schritt (b) und vor Schritt (c) einseitig oder beidseitig mit einem Vorfällungsmittel in Kontakt gebracht, insbesondere flächig beschichtet, wird, wobei das Bindemittel der Basismischung(en) im Vorfällungsmittel unlöslich ist.

7. Verfahren nach einem der Ansprüche 1 bis 6, **dadurch gekennzeichnet, dass** das Verfahren zusätzlich folgenden Schritt umfasst:
d. Waschen des Films in einer Waschlösung, wobei die Waschlösung vorzugsweise Wasser oder wenigstens einen Alkohol, beispielsweise Methanol, Ethanol, iso-Propanol oder eine Mischung daraus, umfasst oder daraus gebildet ist,
- und/oder dass das Verfahren zusätzlich folgenden Schritt umfasst:
e Trocknen der Folie in einer Trocknungsvorrichtung, vorzugsweise einem Band- oder Walzentrockner, mit Umluft oder einem Inertgas.

8. Verfahren nach einem der Ansprüche 1 bis 7, **dadurch gekennzeichnet, dass** das Verfahren zusätzlich folgenden Schritt umfasst:
f. Kompaktieren der Folie in einer Pressvorrichtung, einer Walzvorrichtung oder einer Kalandriervorrichtung, vorzugsweise unter Einwirkung einer Temperatur von größer als 50°C oder Kompaktieren der Folie durch thermisches Schrumpfen.

9. **Poröse Folie** hergestellt mit einem Verfahren nach einem der Ansprüche 1 bis 8.

10. Folie nach Anspruch 9, **dadurch gekennzeichnet, dass** die Folie eine bevorzugt im Wesentlichen konstante Dicke zwischen 50 µm und 1000 µm, bevorzugt zwischen 200 µm und 500 µm, aufweist.

11. Folie nach Anspruch 9 oder 10, **dadurch gekennzeichnet, dass** die Folie eine erste Folienschicht, eine zweite Folienschicht und eine zwischen der ersten und der zweiten Folienschicht angeordnete Trennschicht umfasst, wobei die erste Folienschicht und die zweite Folienschicht eine Dicke zwischen 20 µm und 500 µm aufweisen, und wobei die Trennschicht eine Dicke zwischen 5 µm und 50 µm aufweist.

12. Folie nach einem der Ansprüche 9 bis 11, **dadurch gekennzeichnet, dass** die Trennschicht ein elektrischer Isolator ist, und/oder dass die erste Folienschicht und die zweite Folienschicht ein elektrischer Leiter ist.

13. **Elektrodenmaterial** umfassend eine Folie nach einem der Ansprüche 9 bis 12, sowie eine an den Außenflächen des Elektrodenmaterials angeordnete Stromableitungsschicht.

14. Elektrodenmaterial nach Anspruch 13, umfassend wenigstens zwei Lagen einer Folie nach einem der Ansprüche 9 bis 12.

15. **Energiespeichermedium** umfassend ein Elektrodenmaterial nach Anspruch 14, sowie einen Elektrolyten und zwei Kontaktierungselemente.

## Claims

1. A **method** for preparing a multi-layer porous film, comprising the following steps:
a. providing a flowable first base mixture for a first film layer of the film, wherein the first base mixture comprises a solvent, an additive insoluble in the solvent and a polymeric binder dissolved in the solvent, providing a flowable second base mixture for forming a second film layer, wherein the second base mixture comprises a solvent, an additive insoluble in the solvent and a polymeric binder dissolved in the solvent, and providing a flowable third base mixture for forming a separating layer, wherein the third base mixture comprises a solvent and a polymeric binder dissolved in the solvent,
b. forming a film precursor sheet, wherein the film precursor sheet comprises at least one sublayer made of the first base mixture, a second sublayer made of the second base mixture and a third sublayer made of the third base mixture, wherein the sublayers extend parallel to each other in the main extension direction of the film precursor sheet,
c. contacting the film precursor sheet with a precipitating agent, wherein the solvent of the first base mixture is soluble in the precipitating agent,
the binder of the base mixtures being at least partially insoluble in the precipitating agent, wherein the binder is precipitated to form the porous film,
**characterised in that** the film precursor sheet is formed by co-extruding the base mixtures, and **in that** the first base mixture is configured to form an anode material, the second base mixture is configured to form a cathode material, and the third base mixture is arranged between the first base mixture and the second base mixture and is substantially free from electrically conductive components, or it is electrically non-conductive.

2. The method according to claim 1, **characterised in that** the polymeric binder of the base mixture(s) comprises or consists of polysulfones, polyimides, polystyrene, carboxymethyl cellulose, polyether ketones, polyethers, polyelectrolytes, fluorinated polymers, in particular polyvinylidene fluoride, or a mixture of at least two of them, and/or **in that** the solvent of the base mixture(s) comprises or consists of dimethylacetamide, dimethyl formamide, N-methyl pyrrolidone, N-ethyl pyrrolidone, sulfolane, dimethyl sulfoxide, methanol, ethanol, isopropanol, water, or a mixture of at least two of them.

3. The method according claim 1 or 2, **characterised in that** the additive is an electroactive agent.

4. The method according to claim 3, **characterised**
- **in that** the electroactive agent comprises or consists of a lithium oxide and/or a lithium sulfide and/or a lithium fluoride and/or a lithium phosphate, in particular lithium manganese dioxide, lithium cobalt dioxide, lithium nickel manganese cobalt dioxide, lithium nickel cobalt aluminum oxide, lithium nickel manganese spinel, lithium nickel manganese dioxide, lithium iron phosphate, lithium manganese phosphate, lithium cobalt phosphate, or any mixture thereof, and/or
- **in that** the electroactive agent comprises or consists of graphite, graphene, silicon nanoparticles, lithium titanate, tin, or a mixture thereof.

5. The method according to one of claims 1 to 4, **characterised in that** the base suspension additionally comprises a conductive agent, wherein the conductive agent comprises or consists of conductive carbon, in particular carbon black, graphene or graphite, and/or **in that** the precipitating agent comprises or consists of water, at least one alcohol, for example methanol, ethanol, isopropanol, the solvent of a base mixture, or a mixture thereof.

6. The method according to one of claims 1 to 5, **characterised in that** forming the film precursor sheet comprises the unsupported co-extrusion of the base mixture(s), preferably the unsupported co-extrusion of the first base mixture, the second base mixture and the third base mixture, and/or **in that** after step (b) and before step (c) the film precursor sheet is brought into contact, in particular coated over its surface, with a pre-precipitating agent on one or both sides, the binder of the base mixture(s) being insoluble in the pre-precipitating agent.

7. The method according to one of claims 1 to 6, **characterised in that** the method additionally comprises the following step:
d. washing the film in a washing solution, wherein the washing solution preferably comprises or is formed of water or at least one alcohol, for example methanol, ethanol, isopropanol, or a mixture thereof,
- and/or **in that** the method additionally comprises the following step:
e. drying the film in a drying apparatus, preferably a belt or drum dryer, with recirculating air or an inert gas.

8. The method according to one of claims 1 to 7, **characterised in that** the method additionally comprises the following step:
f. compacting the film in a press apparatus, a roller apparatus or a calendering apparatus, preferably under the influence of a temperature of more than 50 °C or compacting the film by thermal shrinking.

9. A **porous film** prepared by a method according to one of claims 1 to 8.

10. The film according to claim 9, **characterised in that** the film has a preferably substantially constant thickness between 50 µm and 1000 µm, preferably between 200 µm and 500 µm.

11. The film according to claim 9 or 10, **characterised in that** the film comprises a first film layer, a second film layer and a separating layer arranged between the first and the second film layer, wherein the first film layer and the second film layer have a thickness between 20 µm and 500 µm, and wherein the separating layer has a thickness between 5 µm and 50 µm.

12. The film according to one of claims 9 to 11, **characterised in that** the separating layer is an electrical insulator, and/or **in that** the first film layer and the second film layer are electrical conductors.

13. An **electrode material**, comprising a film according to one of claims 9 to 12 and a current dissipation layer arranged on the outer surfaces of the electrode material.

14. The electrode material according to claim 13, comprising at least two plies of a film according to one of claims 9 to 12.

15. An **energy storage medium**, comprising an electrode material according to claim 14, and an electrolyte and two contacting elements.

## Revendications

1. **Procédé** de fabrication d'une feuille poreuse multicouche, comprenant les étapes suivantes :
a. fourniture d'un premier mélange de base fluide destiné à former une première couche de feuille de la feuille, ledit premier mélange de base comprenant un solvant, un additif insoluble dans le solvant et un liant polymère dissous dans le solvant, fourniture d'un deuxième mélange de base fluide destiné à former une deuxième couche de feuille, ledit deuxième mélange de base comprenant un solvant, un additif insoluble dans le solvant ainsi qu'un liant polymère dissous dans le solvant, et fourniture d'un troisième mélange de base fluide destiné à former une couche de séparation, ledit troisième mélange de base comprenant un solvant ainsi qu'un liant polymère dissous dans le solvant,
b. formation d'un film précurseur de feuille, ledit film précurseur de feuille comprenant au moins une sous-couche constituée du premier mélange de base, une deuxième sous-couche constituée du deuxième mélange de base et une troisième sous-couche constituée du troisième mélange de base, lesdites sous-couches s'étendant parallèlement les unes aux autres dans la direction d'extension principale du film précurseur de feuille,
c. mise en contact du film précurseur de feuille avec un agent précipitant, le solvant du premier mélange de base étant soluble dans l'agent de précipitation,
le liant des mélanges de base étant au moins partiellement insoluble dans l'agent précipitant, ledit liant étant précipité de manière à former la feuille poreuse,
**caractérisé en ce que** le film précurseur de feuille est formé par co-extrusion des mélanges de base, et **en ce que** le premier mélange de base est conçu pour former un matériau d'anode, le deuxième mélange de base est conçu pour former un matériau de cathode, et le troisième mélange de base est disposé entre le premier mélange de base et le deuxième mélange de base et est sensiblement exempt de constituants électriquement conducteurs ou est électriquement non conducteur.

2. Procédé selon la revendication 1, **caractérisé en ce que** le liant polymère du ou des mélanges de base comprend ou est constitué de polysulfones, de polyimides, de polystyrène, de carboxyméthylcellulose, de polyéthercétones, de polyéthers, de polyélectrolytes, de polymères fluorés, en particulier de polyfluorure de vinylidène, ou un mélange d'au moins deux de ceux-ci, et/ou **en ce que** le solvant du ou des mélanges de base comprend ou est constitué de diméthylacétamide, de diméthylformamide, de N-méthylpyrrolidone, de N-éthylpyrrolidone, de sulfolane, de diméthylsulfoxyde, de méthanol, d'éthanol, d'isopropanol, d'eau ou d'un mélange d'au moins deux de ceux-ci.

3. Procédé selon la revendication 1 ou 2, **caractérisé en ce que** l'additif est un agent électroactif.

4. Procédé selon la revendication 3, caractérisé
- que l'agent électroactif comprend ou est constitué d'un oxyde de lithium et/ou d'un sulfure de lithium et/ou d'un fluorure de lithium et/ou d'un phosphate de lithium, en particulier de dioxyde de lithium-manganèse, de dioxyde de lithium-cobalt, de dioxyde de lithium-nickel-manganèse-cobalt, d'oxyde de lithium-nickel-cobalt-aluminium, de spinelle de lithium-nickel-manganèse, de dioxyde de lithium-nickel-manganèse, de phosphate de lithium-fer, de phosphate de lithium-manganèse, de phosphate de lithium-cobalt ou d'un mélange quelconque de ceux-ci, et/ou
- en ce que l'agent électroactif comprend ou est constitué de graphite, de graphène, de nanoparticules de silicium, de titanate de lithium, d'étain ou d'un mélange de ceux-ci.

5. Procédé selon l'une des revendications 1 à 4, **caractérisé en ce que** la suspension de base comprend en outre un agent conducteur, ledit agent conducteur comprenant ou étant constitué de carbone conducteur, en particulier de noir de carbone, de graphène ou de graphite, et/ou **en ce que** l'agent de précipitation comprend de l'eau, au moins un alcool, par exemple du méthanol, de l'éthanol, de l'isopropanol, le solvant d'un mélange de base, ou un mélange de ceux-ci, ou est constitué de ceux-ci.

6. Procédé selon l'une des revendications 1 à 5, **caractérisé en ce que** la formation du film précurseur de feuille comprend l'extrusion sans support du ou des mélanges de base, préférablement la co-extrusion sans support du premier mélange de base, du deuxième mélange de base et du troisième mélange de base, et/ou **en ce que**, après l'étape (b) et avant l'étape (c), le film précurseur de feuille est mis en contact sur un côté ou sur les deux côtés avec un agent de pré-précipitation, en particulier recouvert sur toute sa surface, le liant du ou des mélanges de base étant insoluble dans l'agent de pré-précipitation.

7. Procédé selon l'une des revendications 1 à 6, **caractérisé en ce que** le procédé comprend en outre l'étape suivante :
d. lavage du film dans une solution de lavage, ladite solution de lavage comprenant préférablement ou étant constituée préférablement d'eau ou d'au moins un alcool, par exemple du méthanol, de l'éthanol, de l'isopropanol ou un mélange de ceux-ci,
- et/ou **en ce que** le procédé comprend en outre l'étape suivante :
e. séchage de la feuille dans un dispositif de séchage, de préférence un séchoir à bande ou à rouleaux, à l'aide d'air circulant ou d'un gaz inerte.

8. Procédé selon l'une des revendications 1 à 7, **caractérisé en ce que** le procédé comprend en outre l'étape suivante :
f. compactage de la feuille dans un dispositif de pressage, un dispositif de laminage ou un dispositif de calandrage, préférablement sous l'effet d'une température supérieure à 50 °C, ou compactage de la feuille par rétraction thermique.

9. **Feuille poreuse** fabriquée par un procédé selon l'une des revendications 1 à 8.

10. Feuille selon la revendication 9, **caractérisée en ce que** la feuille présente une épaisseur de préférence sensiblement constante comprise entre 50 µm et 1 000 µm, de préférence entre 200 µm et 500 µm.

11. Feuille selon la revendication 9 ou 10, **caractérisée en ce que** la feuille comprend une première couche de feuille, une deuxième couche de feuille et une couche de séparation disposée entre la première et la deuxième couche de feuille, la première couche de feuille et la deuxième couche de feuille présentant une épaisseur entre 20 µm et 500 µm, et la couche de séparation présentant une épaisseur entre 5 µm et 50 µm.

12. Feuille selon l'une des revendications 9 à 11, **caractérisée en ce que** la couche de séparation est un isolant électrique, et/ou **en ce que** la première couche de feuille et la deuxième couche de feuille sont un conducteur électrique.

13. **Matériau d'électrode** comprenant une feuille selon l'une des revendications 9 à 12, ainsi qu'une couche de conduction de courant disposée sur les surfaces extérieures du matériau d'électrode.

14. Matériau d'électrode selon la revendication 13, comprenant au moins deux couches d'une feuille selon l'une des revendications 9 à 12.

15. **Support de stockage d'énergie** comprenant un matériau d'électrode selon la revendication 14, ainsi qu'un électrolyte et deux éléments de contact.
